# FASCICULE DE BREVET EUROPEEN

(11) **EP 3 730 410 B1**
(45) Date de publication et mention de la délivrance du brevet: **22.09.2021**
(21) Numéro de dépôt: 20166782.1
(22) Date de dépôt: 30.03.2020
(51) Int. Cl.: B64F 5/60, B64D 33/02, B64C 27/04, B64C 27/00, F02C 7/052, B64D 45/00, F02C 9/00, F02C 7/055

(54) **PROCEDE ET DISPOSITIF POUR ESTIMER LA SANTE D'UNE INSTALLATION MOTRICE D'UN AERONEF POURVU D'AU MOINS UN MOTEUR ET D'UN FILTRE COLMATABLE FILTRANT DE L'AIR EN AMONT**
VERFAHREN UND VORRICHTUNG ZUM ABSCHÄTZEN DES BETRIEBSZUSTANDS EINER ANTRIEBSANLAGE EINES LUFTFAHRZEUGS, DIE MINDESTENS MIT EINEM MOTOR UND EINEM VERSCHLIESSBAREN FILTER ZUR VORHERIGEN FILTERUNG DER LUFT AUSGESTATTET IST
METHOD AND DEVICE FOR ESTIMATING THE HEALTH CONDITION OF A DRIVE SYSTEM OF AN AIRCRAFT PROVIDED WITH AT LEAST ONE ENGINE AND A CLOGGABLE FILTER FILTERING THE AIR UPSTREAM

(30) Priorité: 17.04.2019 FR 1904084
(43) Date de publication de la demande: 28.10.2020
(73) Titulaire: Airbus Helicopters, 13725 Marignane Cedex (FR)
(72) Inventeur: CAMHI, Emmanuel, 13710 FUVEAU (FR)
(74) Mandataire: GPI Brevets

(56) Documents cités:
- EP-A1- 2 623 746
- EP-A1- 2 623 747
- EP-A1- 3 309 079
- FR-A1- 3 064 680
- US-A1- 2009 261 208
- US-A1- 2016 347 479

## Description

La présente invention concerne un procédé et un dispositif pour estimer la santé d'une installation motrice d'un aéronef pourvu d'au moins un moteur et d'un filtre colmatable filtrant de l'air en amont du moteur. Le terme « colmatable » signifie que le filtre est susceptible d'être colmaté au moins partiellement en utilisation par un corps étranger.

L'invention se situe donc dans le domaine technique des installations motrices de véhicule, notamment d'un aéronef et plus particulièrement d'un giravion.

En effet, un aéronef est usuellement muni d'une installation motrice comprenant au moins un moteur alimenté en air par une entrée d'air. Par exemple, un aéronef à voilure tournante comporte une installation motrice pourvue d'au moins un moteur afin de mettre en rotation une voilure tournante. Un hélicoptère est par exemple souvent équipé d'au moins un turbomoteur, dénommé parfois « turbine à gaz ».

En outre, chaque moteur est dimensionné pour pouvoir être utilisé selon au moins un régime de fonctionnement, chaque régime de fonctionnement associant une puissance développée à une durée d'utilisation. Parmi les régimes connus, on peut citer notamment:
- le régime de décollage associant une puissance maximale au décollage PMD à une durée d'utilisation de l'ordre de cinq à dix minutes,
- le régime maximal continu associant une puissance maximale en continu PMC à une durée d'utilisation illimitée.

Sur un aéronef multimoteur, il existe aussi des régimes de surpuissance en urgence, ces régimes étant utilisés lorsque l'un des moteurs tombe en panne. Ces régimes de surpuissance peuvent comprendre:
- un premier régime d'urgence associant une puissance de super urgence OEI30" à une durée d'utilisation de l'ordre de trente secondes,
- un deuxième régime d'urgence associant une puissance maximale d'urgence OEI2' à une durée d'utilisation de l'ordre de deux minutes,
- un troisième régime d'urgence associant une puissance intermédiaire d'urgence OEIcontinu à une durée d'utilisation couvrant la fin d'un vol par exemple.

En parallèle, il est courant de déterminer le nombre d'heures de vol que peut supporter un moteur d'aéronef avant de devoir être révisé. Ce nombre d'heures de vol est connu sous l'acronyme TBO ou l'expression « time between overhaul » en langue anglaise.

Dans ces conditions, un motoriste établit, par calculs ou par essais, pour chaque régime une puissance minimale garantie, cette puissance minimale garantie correspondant à la puissance minimale que doit fournir le moteur lorsqu'il aura atteint ledit nombre d'heures de vol TBO, un tel moteur étant dénommé « moteur vieilli » par commodité dans la suite du texte.

Les performances d'un aéronef dépendent alors de la puissance pouvant être développée par chaque moteur. Par exemple, la masse d'un aéronef au décollage et/ou la charge utile et/ou sa vitesse de croisière sont notamment conditionnées par la puissance développée par chaque moteur dans les divers régimes. Toutefois, la puissance développée par un moteur tend à décroître dans le temps. Les puissances développées par un moteur neuf sont généralement supérieures aux puissances minimales garanties pour prendre en considération la perte de puissance par vieillissement. Dès lors, pour garantir les performances requises indépendamment de l'ancienneté des moteurs d'un aéronef, les performances d'un aéronef peuvent être calculées sur la base des puissances minimales garanties alors que les performances de l'aéronef pourraient être évaluées à la hausse en présence de moteurs neufs.

En outre, des « polluants » tels que la poussière, le sable, la neige, le givre sont susceptibles de pénétrer dans une entrée d'air, cette entrée d'air alimentant en comburant un moteur situé en aval de l'entrée d'air selon le sens de circulation de l'air. Ces polluants sont susceptibles de dégrader le moteur. Dès lors, un système de filtration d'air peut équiper une entrée d'air pour au moins limiter l'ingestion de polluants. Un système de filtration d'air est dénommé plus simplement filtre par la suite. Par exemple, un filtre peut comprendre une grille, un filtre à vortex ou encore un filtre à barrière connu sous l'expression anglaise « Inlet barrier Filter ». Un filtre génère de fait des pertes d'installation qui sont fonction de son colmatage, ces pertes d'installation tendant à réduire la puissance développée par un moteur alimenté en air via ce filtre. De manière conservative, les performances d'un aéronef sont parfois calculées sur la base non seulement d'un moteur vieilli mais aussi en considérant que le filtre est colmaté.

Cette approche conservatrice est intéressante dans la mesure où les performances certifiées de l'aéronef sont garanties quel que soit l'état du filtre. Cependant, l'aéronef peut disposer durant sa vie d'une marge de puissance non exploitée en termes de performances.

Par ailleurs, certains règlements de certification peuvent requérir des moyens pour vérifier que chaque moteur est à même de fournir les puissances minimales garanties permettant à l'aéronef d'atteindre les performances certifiées.

Afin de vérifier qu'un moteur fonctionne correctement, un contrôle de santé moteur est réalisé pour s'assurer que ce moteur développe des puissances supérieures ou égales aux puissances minimales garanties. Dans l'affirmative, le moteur demeure à même de fournir les puissances requises pour atteindre les performances certifiées. A l'inverse, une action de maintenance doit être entreprise.

Un contrôle de santé moteur peut être réalisé de diverses manières. Par exemple, deux paramètres de surveillance peuvent être utilisés pour contrôler les performances d'un turbomoteur.

Un premier paramètre de surveillance peut être une température du moteur, cette température pouvant être la température TET des gaz à l'entrée d'une turbine haute pression d'un générateur de gaz ou la température T45 des gaz à l'entrée d'une turbine libre.

Par ailleurs, un autre paramètre de surveillance est relatif à la puissance moteur délivrée par le turbomoteur ou encore au couple moteur du turbomoteur, la puissance moteur et le couple moteur du turbomoteur étant dépendant l'un de l'autre. Néanmoins, la vitesse de rotation du générateur de gaz du turbomoteur, dénommée Ng par l'homme du métier, étant finalement liée à la puissance délivrée par le turbomoteur, un deuxième paramètre de surveillance retenu peut être cette vitesse de rotation Ng du générateur de gaz.

Par suite, le contrôle de l'état de santé du turbomoteur peut consister par exemple :
- à mesurer la valeur du premier paramètre de surveillance puis à vérifier que la valeur de la puissance courante du moteur est supérieure ou égale à la valeur de la puissance minimale garantie qu'aurait un moteur vieilli dans les mêmes conditions, ou
- à mesurer la valeur du deuxième paramètre de surveillance puis à vérifier que la valeur de la puissance courante du moteur est supérieure ou égale à la valeur de la puissance minimale garantie qu'aurait un moteur vieilli dans les mêmes conditions.

Les puissances minimales garanties sont établies en testant un moteur sur un banc d'essais. Pour comparer les résultats de mesures effectuées en vol avec des mesures effectuées sur un banc d'essais, les conditions de mesure en vol peuvent être optimisées afin d'être proches des conditions de mesure sur un banc d'essais. Les mesures effectuées sur un banc d'essais sont réalisées dans des conditions thermiquement stables. Dès lors, pour réaliser un contrôle de santé moteur en vol, l'aéronef peut être placé dans une phase de vol particulière telle qu'un vol en palier à altitude et vitesse stabilisées pendant plusieurs minutes. Le pilote peut alors lancer une action manuelle requérant la réalisation d'un contrôle de santé moteur ou encore un tel contrôle de santé moteur peut être réalisé automatiquement lorsque les conditions requises sont présentes.

En outre, pour évaluer la puissance courante développée par un moteur à comparer à une puissance minimale garantie mesurée sur banc d'essais, des effets d'avionnage peuvent être pris en considération. Les effets d'avionnage engendrent des pertes de puissances dues par exemple à des pertes de charges dans les entrées d'air des moteurs ou encore à des distorsions de pressions voire même aux tuyères. De plus, les effets d'avionnage incluent des pertes de puissance dues à des prélèvements de puissance réalisés sur le moteur par des accessoires et/ou à l'altitude de l'aéronef et/ou à la température extérieure notamment.

Ces effets d'avionnage tendent de fait à réduire la puissance développée par un arbre de sortie d'un moteur une fois installé sur un aéronef. Les effets d'avionnage sont alors aussi dénommés « pertes d'avionnage » en référence à la perte de puissance rencontrée. Ainsi, une perte de puissance correspondant aux pertes d'avionnage peut être évaluée pour déterminer la puissance courante du moteur en tant que tel. La puissance courante du moteur comparée à une puissance minimale garantie peut ainsi être égale à la somme de la perte de puissance et de la puissance mesurée en vol développée par un arbre de sortie du moteur installé sur un aéronef.

En présence d'une entrée d'air sans filtre, la perte de puissance due aux effets d'avionnage et notamment au système d'acheminement d'air peut être estimée avec précision. Par contre, en présence d'un filtre, l'estimation avec précision de la perte de puissance est plus délicate puisque cette perte de puissance dépend du niveau de colmatage éventuel du filtre.

Selon une première stratégie, le colmatage peut être évalué à l'aide de mesures de pression réalisées en amont et en aval du filtre.

Selon une deuxième stratégie, la perte de puissance peut être établie par essais sur la base d'un filtre non colmaté. La perte de puissance générée par un filtre propre est inférieure à la perte de puissance générée par un filtre colmaté. Cette deuxième stratégie est donc sécuritaire en tendant à minimiser la puissance courante du moteur en tant que tel qui est calculée en ajoutant la perte de puissance estimée à la puissance mesurée. Par contre, lorsque la puissance courante jugée trop faible résulte d'un filtre colmaté et non pas d'un moteur trop usé, cette deuxième stratégie peut induire une action de maintenance prématurée sur un moteur.

Le document US 2016/0347479 propose un autre procédé pour surveiller au sol un moteur d'un aéronef ayant un filtre à barrière. Selon ce procédé, un premier contrôle de santé moteur est effectué en considérant que le filtre à barrière est colmaté. Si les résultats de ce premier contrôle de santé moteur ne sont pas satisfaisants, un deuxième contrôle de santé moteur est effectué en ouvrant une entrée d'air de dérivation et en considérant que l'aéronef n'a pas de filtre à barrière.

Le document EP 3309079 décrit une méthode pour établir une information de puissance.

Le document EP 2623746 décrit un procédé d'optimisation de performances d'un aéronef.

Le document FR 3064680 décrit un procédé de vérification de la puissance maximale disponible d'une turbomachine d'un aéronef ayant au moins deux turbomachines.

Le document EP 2623747 concerne un procédé pour réaliser un contrôle de santé d'un turbomoteur.

Le document US 2009/261208 décrit un aéronef muni d'un filtre à barrière lavable.

La présente invention a pour objet de proposer un procédé alternatif pour estimer la santé d'une installation motrice d'un aéronef pourvu d'au moins un moteur et d'un filtre colmatable filtrant de l'air en amont du moteur.

L'invention vise ainsi un procédé de contrôle pour contrôler une installation motrice d'un aéronef, ladite installation motrice comprenant au moins un moteur et une entrée d'air alimentant en air ledit au moins un moteur, ladite installation motrice comprenant un filtre colmatable filtrant l'air en amont dudit moteur.

Ce procédé comporte une étape de réalisation d'un contrôle de puissance de l'aéronef à l'aide des opérations suivantes :
- détermination en vol ou au sol d'une puissance dite « puissance courante » développée par ledit moteur au sein de l'aéronef sans prise en compte d'une perte de puissance générée par l'agencement dudit moteur dans ledit aéronef et d'un niveau de colmatage dudit filtre, à savoir indépendamment d'une perte de puissance générée par l'installation dudit moteur dans ledit aéronef et d'un niveau de colmatage dudit filtre,
- détermination que ladite puissance courante est supérieure ou égale à une puissance minimale garantie mémorisée, ledit contrôle de puissance de l'aéronef étant considéré réussi lorsque ladite puissance courante est supérieure ou égale à ladite puissance minimale garantie.

En présence d'un aéronef multimoteur, ce procédé peut être appliqué pour chaque moteur les uns après les autres.

Dès lors, ce procédé prévoit un contrôle de puissance de l'aéronef, à ne pas confondre avec un contrôle de puissance d'un moteur. Ce contrôle de puissance de l'aéronef vise à évaluer la puissance développée par le moteur installé quelles que soient les conditions de colmatage du filtre et non pas la puissance du moteur pris isolément. Ces conditions de colmatage et de manière générale les pertes de puissance d'avionnage telles qu'une perte de puissance résultant d'un prélèvement sur le moteur ne sont pas prises en compte dans le contrôle de puissance de l'aéronef et donc dans le calcul de la puissance courante. Le contrôle de puissance de l'aéronef ne recadre pas des mesures de puissance pour les comparer à des mesures faites sur un banc d'essais. Une telle caractéristique s'avère avantageuse car l'évaluation d'une perte de puissance générée par exemple par un filtre à barrière colmatable est délicate à réaliser de manière non conservative et précise.

Contrairement à un contrôle de santé moteur, la puissance courante développée sur un aéronef par un moteur est évaluée sans tenir compte des effets d'avionnage. Le contrôle de puissance de l'aéronef ne mesure pas cette puissance développée par un moteur de manière conservative, mais mesure la puissance courante réelle par exemple en sortie du moteur installé sur l'aéronef. Si la puissance courante est supérieure ou égale à la puissance minimale garantie du régime courant, il en résulte que le moteur développe nécessairement une puissance conforme à la puissance minimale garantie que le filtre soit colmaté ou non.

Le contrôle de puissance de l'aéronef peut être fait à une fréquence prédéterminée, par exemple toutes les 25 heures sur ordre d'un calculateur de contrôle embarqué dans l'aéronef, peut être fait sur ordre d'un pilote voire peut être effectué en continu pendant le vol.

Le contrôle de puissance de l'aéronef peut être utilisé non seulement en présence d'un filtre à barrière mais aussi d'un filtre à vortex ou d'une grille par exemple. Le contrôle de puissance de l'aéronef peut être utilisé aussi quel que soit le type de la tuyère utilisée puisqu'une fois encore le contrôle de puissance de l'aéronef prend en compte la puissance développée au sein de l'aéronef.

Le procédé peut de plus comporter une ou plusieurs des caractéristiques qui suivent, prises seules ou en combinaison, sans s'écarter de la portée des revendications annexées.

Par exemple, l'étape de détermination de la puissance courante peut comporter les opérations suivantes : mesure d'un couple moteur, calcul de la puissance courante égale au produit du couple moteur et d'une vitesse de rotation moteur, ladite vitesse de rotation moteur étant égale à une vitesse de rotation d'un arbre de sortie dudit moteur ou égale à une vitesse de rotation d'un arbre effectuant une rotation à une même vitesse que l'arbre de sortie ou au produit d'un coefficient de proportionnalité mémorisé et d'une vitesse de rotation d'un organe tournant lié mécaniquement à l'arbre de sortie.

L'expression « arbre de sortie » désigne un arbre du moteur à connecter à un élément n'appartenant pas au moteur et mis en mouvement par le moteur.

A titre illustratif, le couple exercé sur un arbre de sortie entraîné par la turbine libre d'un turbomoteur et la vitesse de rotation de cet arbre de sortie peuvent être mesurés pour calculer la puissance courante par le biais d'une multiplication. Alternativement, sur un hélicoptère il est possible de mesurer ledit couple et la vitesse de rotation du rotor principal, et de multiplier cette vitesse de rotation par un coefficient correspondant au rapport de réduction de vitesse existant entre la vitesse de rotation de l'arbre de sortie et la vitesse de rotation du rotor principal.

Selon un autre aspect, l'étape de détermination que ladite puissance courante est supérieure ou égale à une puissance minimale garantie mémorisée peut comporter les opérations suivantes : calcul d'un indicateur de puissance de l'aéronef fonction uniquement de ladite puissance courante et d'une puissance minimale garantie mémorisée, ledit contrôle de puissance de l'aéronef étant considéré réussi ou échoué en fonction d'une valeur dudit indicateur de puissance de l'aéronef par rapport à zéro.

Dès lors, un nouvel indicateur dénommé « indicateur de puissance de l'aéronef » est calculé. Cet indicateur de puissance de l'aéronef est au moins fonction d'une différence entre la puissance courante et la puissance minimale garantie au point de vol courant.

Par exemple, cet indicateur de puissance de l'aéronef peut être exprimé en puissance en étant égal à la puissance courante Pcour moins la puissance minimale garantie Pmini soit : Pcour-Pmini. Selon une autre possibilité, cet indicateur de puissance de l'aéronef peut être exprimé en rapport de puissance en étant égal à la puissance courante moins la puissance minimale garantie le tout divisé par la puissance minimale garantie par exemple soit : (Pcour-Pmini)/Pmini. Des constantes peuvent éventuellement intervenir dans le calcul de cet indicateur de puissance de l'aéronef.

Avec un tel indicateur de puissance de l'aéronef basé sur la puissance courante moins la puissance minimale garantie, cet indicateur de puissance de l'aéronef doit être positif voire nul pour que le contrôle de puissance de l'aéronef soit un succès. L'indicateur de puissance de l'aéronef peut être positif ou nul dans les cas suivants :
- le moteur n'est pas neuf mais a un niveau de puissance supérieur ou égal à la puissance minimale garantie et le filtre est propre, ou par exemple
- le filtre est colmaté mais le moteur a un niveau de puissance suffisamment élevé pour compenser les fortes pertes de charges du filtre.

Le procédé ne nécessite pas de mesurer précisément l'évolution en temps réel du colmatage du filtre, une telle mesure étant extrêmement complexe. En mesurant la puissance courante développée par le moteur sur l'aéronef, tant que l'indicateur de puissance de l'aéronef est positif voire nul, cela signifie qu'un colmatage peut être présent, mais que les pertes de puissance en résultant sont compensées par les marges opérationnelles du moteur.

Selon un autre exemple, l'indicateur de puissance de l'aéronef peut être exprimé en puissance en étant égal à la puissance minimale garantie Pmini moins la puissance courante Pcour soit : Pmini-Pcour. Selon une autre possibilité, cet indicateur de puissance de l'aéronef peut être exprimé en rapport de puissance en étant égal à la puissance minimale garantie moins la puissance courante le tout divisé par la puissance minimale garantie par exemple soit : (Pmini-Pcour)/Pmini. Des constantes peuvent éventuellement intervenir dans le calcul de cet indicateur de puissance de l'aéronef. L'indicateur de puissance de l'aéronef doit alors être négatif pour que le contrôle de puissance de l'aéronef soit réussi.

Le procédé comporte aussi les étapes suivantes :
- détermination que ledit contrôle de puissance de l'aéronef a échoué lorsque ladite puissance courante est inférieure à ladite puissance minimale garantie,
- sous condition d'un contrôle de puissance de l'aéronef échoué, lavage dudit filtre puis réalisation d'un nouveau contrôle de puissance de l'aéronef.

Des marges peuvent être prises en compte pour que le vol de l'aéronef puisse aller à son terme si les résultats d'un contrôle de puissance de l'aéronef effectué en vol ne sont pas satisfaisants. Par exemple, la puissance minimale garantie comparée à la puissance courante peut intégrer une telle marge.

A l'issue d'un vol, le procédé prévoit de laver le filtre. En effet, un filtre colmaté peut conduire à un contrôle de puissance de l'aéronef ayant échoué. Suite au lavage du filtre, un nouveau contrôle de puissance de l'aéronef est réalisé.

Le procédé comporte les opérations suivantes :
- sous condition que le nouveau contrôle de puissance de l'aéronef ait échoué, réalisation d'un contrôle de santé moteur fonction d'une perte de puissance générée au moins par ledit filtre ou en ouvrant une voie de dérivation d'air alimentant sans filtre ledit moteur,
- démontage dudit moteur en dehors de l'aéronef en cas d'échec du contrôle de santé moteur.

Si suite à un lavage du filtre le nouveau contrôle de puissance de l'aéronef a aussi échoué, le procédé comporte une étape de réalisation d'un contrôle de santé moteur usuel prenant cette fois en considération les effets d'avionnage éventuellement en ouvrant une voie de dérivation d'air. Cette caractéristique permet de déterminer si l'échec du contrôle de puissance de l'aéronef résulte des effets d'avionnage ou de l'usure du moteur.

Alternativement ou de manière complémentaire, une voie de dérivation non colmatable peut être ouverte.

Eventuellement, le contrôle de santé moteur peut comporter une étape de calcul d'un indice de santé moteur fonction de ladite puissance courante plus ladite perte de puissance moins ladite puissance minimale garantie. Cet indice de santé doit être positif pour la contrôle de santé moteur soit réussi.

Selon un autre aspect, sous condition d'un contrôle de santé moteur réussi, le procédé comporte alors une étape de génération d'une autorisation de vol dudit aéronef en respectant au moins une performance de l'aéronef prédéterminée qui est calculée sur la base d'au moins une puissance minimale garantie dudit moteur et d'une perte de puissance correspondant au filtre colmaté ou le cas échéant à une perte de charge dans une voie de dérivation.

Une telle performance peut comprendre par exemple une des performances suivantes : la masse d'un aéronef au décollage, la charge utile, la vitesse de croisière, le rayon d'action...

Dans la négative, une action de maintenance doit être entreprise.

Par contre, sous condition d'un contrôle de puissance de l'aéronef réussi, ledit procédé comporte une étape de génération d'une autorisation de vol dudit aéronef en respectant au moins une performance de l'aéronef prédéterminée qui est calculée sur la base d'au moins une puissance minimale garantie dudit moteur et d'une perte de puissance correspondant au filtre non colmaté.

Contrairement à l'état de l'art, le procédé permet alors de tirer profit de la totalité de la puissance disponible lorsque le contrôle de puissance de l'aéronef est réussi. Les performances de l'aéronef et par exemple la masse embarquée peuvent être améliorées significativement.

Outre un procédé, l'invention prévoit un dispositif de contrôle pour réaliser automatiquement un contrôle d'une installation motrice d'un aéronef, ladite installation motrice comprenant au moins un moteur et une entrée d'air alimentant en air ledit au moins un moteur, ladite installation motrice comprenant un filtre colmatable filtrant l'air en amont dudit moteur.

Ce dispositif de contrôle comporte un système de mesure d'au moins une information quantifiant une puissance courante développée par ledit moteur indépendamment d'un niveau de colmatage du filtre et un calculateur de contrôle configuré pour appliquer ce procédé.

Par exemple, le système de mesure comporte un couplemètre agencé sur un arbre de sortie du moteur et un capteur de vitesse agencé sur cet arbre de sortie ou sur un organe mis en mouvement directement ou indirectement par cet arbre de sortie.

Le dispositif peut aussi comprendre une sortie du calculateur de contrôle par laquelle un opérateur peut prendre connaissance des résultats du contrôle de puissance de l'aéronef et le cas échéant du contrôle de santé moteur. Le calculateur de contrôle peut aussi être en communication avec un afficheur configuré pour afficher lesdits résultats.

L'invention vise de plus un aéronef muni d'une installation motrice, ladite installation motrice comprenant au moins un moteur et une entrée d'air alimentant en air ledit au moins un moteur, ladite installation motrice comprenant un filtre colmatable filtrant l'air en amont dudit moteur. Cet aéronef comporte un tel dispositif de contrôle.

L'invention et ses avantages apparaîtront avec plus de détails dans le cadre de la description qui suit avec des exemples donnés à titre illustratif en référence aux figures annexées qui représentent :
[Fig 1] la figure 1, une vue schématique illustrant un aéronef selon l'invention,
[Fig 2] la figure 2, un schéma illustrant le procédé de l'invention.

Les éléments présents dans plusieurs figures distinctes sont affectés d'une seule et même référence.

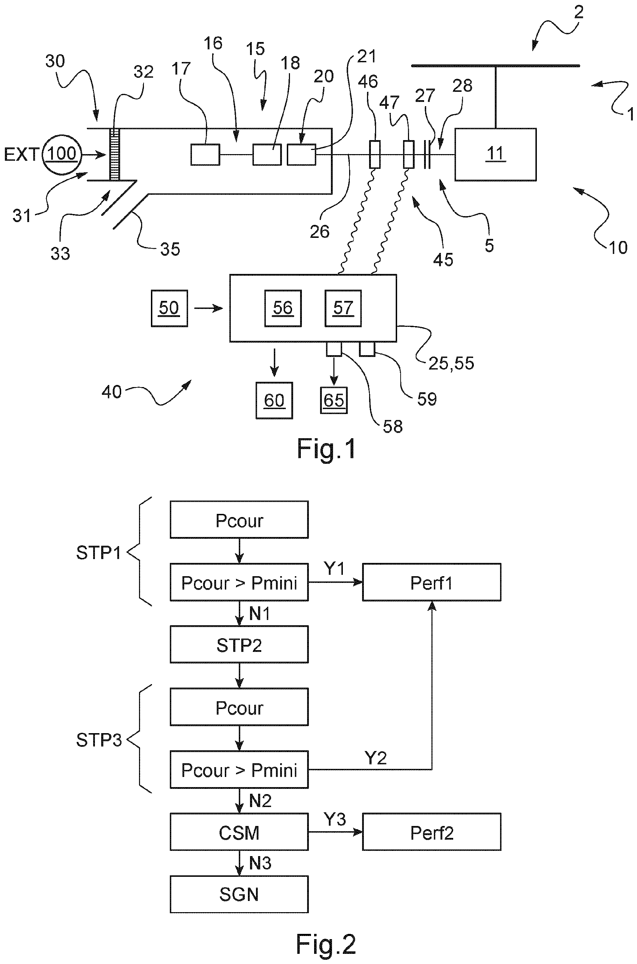

La figure 1 présente un aéronef 1 selon l'invention. L'aéronef 1 illustré est un giravion muni d'une voilure tournante 2. Toutefois, l'invention peut aussi s'appliquer à un autre type de véhicule et notamment d'autres types d'aéronefs par exemple.

L'aéronef 1 comporte une installation motrice 10 comprenant au moins un moteur 15. Chaque moteur 15 présente un arbre de sortie 26 connectable à un organe n'appartenant pas au moteur 15, le moteur 15 mettant en mouvement cet organe par l'arbre de sortie 26. Par exemple, chaque arbre de sortie 26 est relié par une chaîne mécanique 5 à une boîte de transmission de puissance 11 qui met en mouvement notamment la voilure tournante 2. Une telle chaîne mécanique 5 peut comprendre au moins un connecteur mécanique 27, au moins un arbre 28...

Selon l'exemple représenté, au moins un moteur 15 peut être un turbomoteur. Un tel turbomoteur comporte un générateur de gaz 16 muni d'au moins un compresseur 17 lié à au moins une turbine haute pression 18. En aval du générateur de gaz 16, le turbomoteur peut comprendre un ensemble basse pression 20 incluant au moins une turbine basse pression libre 21, l'ensemble basse pression 20 mettant en mouvement l'arbre de sortie 26 directement ou via un système mécanique.

D'autres types de moteurs sont envisageables et par exemple un moteur à pistons.

Par ailleurs, chaque moteur 15 peut être piloté par un calculateur moteur 25, tel qu'un calculateur moteur 25 connu sous l'acronyme « ECU » et l'expression anglaise « Engine Control Unit ». Indépendamment du nombre de moteurs 15 et de la nature des moteurs 15, l'installation motrice 10 comporte un système d'alimentation en air 30. Un tel système d'alimentation en air 30 comporte au moins une entrée d'air 31. L'entrée d'air 31 capte un air frais 100 provenant d'un milieu extérieur EXT situé à l'extérieur de l'aéronef 1 pour l'acheminer vers au moins un moteur 15 via éventuellement au moins un conduit 33.

En outre, l'aéronef 1 comporte au moins un filtre 32 et par exemple un filtre 32 par entrée d'air. Un tel filtre 32 est agencé en amont d'un moteur 15 voire en aval de l'entrée d'air pour filtrer l'air capté et acheminé vers le moteur 15 afin de l'alimenter en comburant. Par exemple, un filtre 32 s'étend dans un conduit 33 du système d'alimentation en air 30. Un filtre 32 est un filtre colmatable, à savoir susceptible d'être plus ou moins colmaté par les polluants filtrés. Un filtre peut alors être un filtre à vortex ou encore un filtre à barrière, ces exemples n'étant pas limitatifs et étant donnés à titre d'exemple.

Cet aéronef 1 est muni d'un dispositif de contrôle 40 appliquant le procédé de l'invention pour contrôler le fonctionnement de cet aéronef 1.

Ce dispositif de contrôle 40 comprend un système 45 de mesure d'au moins une information relative à une puissance courante Pcour développée par le moteur 15 installé, indépendamment d'un niveau de colmatage du filtre 32 voire de manière générale de pertes d'avionnage.

Ce système 45 de mesure peut comprendre un premier capteur et un deuxième capteur mesurant respectivement le couple exercé sur un arbre et une information permettant d'obtenir la vitesse de cet arbre.

Par exemple, un premier capteur prend la forme d'un couplemètre 46. Un tel couplemètre 46 est éventuellement positionné et configuré pour mesurer le couple exercé sur l'arbre de sortie 26. En outre, un deuxième capteur 47 peut comprendre un capteur de position et un dérivateur permettant d'obtenir une vitesse par dérivation de la mesure de position, ou un capteur de vitesse ou un accéléromètre et un intégrateur permettant d'obtenir une vitesse par intégration de la mesure d'accélération. Un deuxième capteur 47 peut être agencé sur l'arbre de sortie 26. Alternativement, un deuxième capteur 47 peut être agencé sur un arbre effectuant une rotation conjointement avec l'arbre de sortie 26 et à la même vitesse que cet arbre de sortie 26 ou encore sur un organe tel que la voilure tournante 2 ou un organe de la boîte de transmission de puissance 11 mis en mouvement au moins par l'arbre de sortie 26 voire sur un organe du moteur lié mécaniquement à l'arbre de sortie 26.

Le dispositif de contrôle 40 comporte un calculateur de contrôle 55 configuré pour appliquer les étapes STP1, STP3 et CSM du procédé de l'invention. Un calculateur et notamment le calculateur de contrôle 55 peut comprendre par exemple au moins un processeur 56 et au moins une mémoire 57, au moins un circuit intégré, au moins un système programmable et/ou au moins un circuit logique, ces exemples ne limitant pas la portée donnée à l'expression « calculateur ». Eventuellement, le calculateur de contrôle 55 et le calculateur moteur 25 forment une seule et même entité. Le calculateur de contrôle 55 peut comprendre plusieurs calculateurs coopérant les uns avec les autres.

Le dispositif de contrôle 40 peut comprendre une commande d'activation 50 manœuvrable par un humain, telle qu'un bouton, un écran tactile... La commande d'activation 50 est reliée au calculateur de contrôle 55 par une liaison filaire ou non filaire pour que sa manœuvre entraîne la génération d'un signal transmis au calculateur de contrôle 55 afin de requérir l'application du procédé de l'invention.

En outre, le dispositif de contrôle 40 peut comprendre un afficheur 60 relié au calculateur de contrôle 55 par une liaison filaire ou non filaire. Le calculateur de contrôle 55 peut générer un signal transmis à l'afficheur 60 pour requérir l'affichage d'un résultat d'un contrôle selon l'invention, par exemple sur requête d'un pilote via une commande d'affichage telle qu'un bouton, un écran tactile...

Selon un aspect, le calculateur de contrôle 55 peut comprendre une sortie de type antenne 58 et/ou une prise 59 pour qu'un opérateur 65 puisse récupérer si besoin le résultat d'un contrôle selon l'invention, le résultat étant mémorisé dans le calculateur de contrôle. Un tel résultat peut comprendre les valeurs des diverses mesures et/ou une information indiquant si un contrôle de puissance de l'aéronef est réussi ou a échoué et le cas échéant si un contrôle de santé moteur est réussi ou a échoué.

La figure 2 illustre un exemple de procédé pouvant être mis en œuvre par un aéronef 1 selon la figure 1.

Ce procédé comporte une étape STP1 de réalisation d'un contrôle de puissance de l'aéronef. Par exemple, cette étape est commandée par un pilote à l'aide d'une commande d'activation 50 ou est réalisée automatiquement par le calculateur de contrôle 55, par exemple à intervalles réguliers ou durant une phase de vol prédéterminée identifiable de manière usuelle.

Lors de cette étape STP1, le calculateur de contrôle 55 détermine en vol ou au sol la puissance courante Pcour développée par le moteur 15 à sa sortie sans prendre en compte les effets d'avionnage, à savoir les pertes de puissance générées par l'installation du moteur 15 dans l'aéronef 1 et par un colmatage du filtre 32.

Par exemple, un premier capteur 46 mesure le couple moteur au niveau de l'arbre de sortie 26 du moteur 15 et le deuxième capteur 47 mesure la vitesse de rotation de cet arbre de sortie 26. Le calculateur de contrôle 55 en déduit la puissance courante Pcour qui est égale au produit du couple moteur et de la vitesse de rotation de l'arbre de sortie 26.

Selon un autre exemple, un premier capteur 46 mesure le couple moteur au niveau de l'arbre de sortie 26 du moteur 15 et le deuxième capteur 47 mesure la vitesse de rotation d'un arbre de travail 27 solidaire en rotation de l'arbre de sortie 26. Le calculateur de contrôle 55 en déduit la puissance courante Pcour qui est égale au produit du couple moteur et de la vitesse de rotation de l'arbre de travail 27.

Selon un autre exemple, un premier capteur 46 mesure le couple moteur au niveau de l'arbre de sortie 26 du moteur 15 et le deuxième capteur 47 mesure la vitesse de rotation de la voilure tournante 2. Le calculateur de contrôle 55 en déduit la puissance courante Pcour qui est égale au produit du couple moteur et d'un coefficient de proportionnalité mémorisé et de la vitesse de rotation de la voilure tournante 2. La puissance courante peut être mesurée au même endroit que la puissance minimale garantie sur banc.

Quel que soit le mode de calcul de la puissance courante, dès lors le calculateur de contrôle 55 détermine si la puissance courante Pcour est supérieure ou égale à une puissance minimale garantie Pmini mémorisée et correspondant le cas échéant au régime moteur courant, possiblement à une marge près.

Eventuellement, pour déterminer si la puissance courante Pcour est supérieure ou égale à une puissance minimale garantie Pmini, le calculateur de contrôle 55 peut calculer la valeur d'un indicateur de puissance APC de l'aéronef. Cet indicateur de puissance APC de l'aéronef 1 n'est pas à confondre avec un indicateur de puissance moteur. Cet indicateur de puissance APC de l'aéronef est fonction uniquement de la puissance courante Pcour et de la puissance minimale garantie Pmini, le contrôle de puissance de l'aéronef étant considéré par le calculateur de contrôle 55 réussi ou échoué en fonction d'une valeur de l'indicateur de puissance APC de l'aéronef par rapport à zéro.

Selon un exemple, l'indicateur de puissance APC de l'aéronef est égal à la puissance courante moins la puissance minimale garantie : APC=Pcour-Pmini. Le contrôle de puissance de l'aéronef est réussi quand l'indicateur de puissance APC est supérieur à zéro voire éventuellement nul.

Selon un autre exemple, l'indicateur de puissance APC de l'aéronef est égal à la puissance courante moins la puissance minimale garantie divisée par la puissance minimale garantie : APC= (Pcour-Pmini)/Pmini. Le contrôle de puissance de l'aéronef est réussi quand l'indicateur de puissance APC est supérieur à zéro voire éventuellement nul.

Selon un exemple, l'indicateur de puissance APC de l'aéronef est égal à la puissance minimale garantie moins la puissance courante : APC=Pmini-Pcour. Le contrôle de puissance de l'aéronef est réussi quand l'indicateur de puissance APC est inférieur à zéro voire éventuellement nul.

Selon un autre exemple, l'indicateur de puissance APC de l'aéronef est égal à la puissance minimale garantie moins la puissance courante divisée par la puissance minimale garantie : APC= (Pmini-Pcour)/Pmini. Le contrôle de puissance de l'aéronef est réussi quand l'indicateur de puissance APC est inférieur à zéro voire éventuellement nul.

Dans tous les cas précédents, le contrôle de puissance de l'aéronef est considéré réussi lorsque la puissance courante Pcour est supérieure ou égale à ladite puissance minimale garantie Pmini. Conformément à la flèche Y1, en présence d'un contrôle de puissance de l'aéronef réussi, le procédé peut comporter une étape de génération Perf1 par exemple avec le calculateur de contrôle 55 d'une information autorisant le vol de l'aéronef 1 en respectant des performances mémorisées de l'aéronef prédéterminées et calculées sur la base d'au moins une puissance minimale garantie du moteur 15 et d'une perte de puissance correspondant au filtre non colmaté. Cette information peut par exemple être affichée sur l'afficheur 60 ou transmise à un opérateur via l'antenne 58 et/ou via la prise 59.

Conformément à la flèche N1, en présence d'un contrôle de puissance de l'aéronef échoué, le procédé comporte une étape STP2 de lavage du filtre 32.

Par exemple, le calculateur de contrôle 55 génère un signal transmis via l'afficheur 60 et/ou via l'antenne 58 et/ou via la prise 59 indiquant que le filtre doit être lavé.

Suite au lavage, le procédé prévoit une étape STP3 de réalisation d'un nouveau contrôle de puissance de l'aéronef.

La puissance courante est à nouveau calculée par le calculateur de contrôle 55 et comparée à la puissance minimale garantie, selon les opérations précédemment décrites.

Conformément à la flèche Y2, en présence d'un nouveau contrôle de puissance de l'aéronef réussi, le procédé peut comporter une étape de génération Perf1 par exemple avec le calculateur de contrôle 55 d'une autorisation de vol de l'aéronef 1 en respectant les performances mémorisées de l'aéronef prédéterminées et calculées sur la base d'au moins une puissance minimale garantie du moteur 15 et d'une perte de puissance correspondant au filtre non colmaté.

Conformément à la flèche N2, en présence d'un contrôle de puissance de l'aéronef échoué, le procédé comporte une étape de réalisation d'un contrôle de santé moteur CSM en fonction d'une perte de puissance générée au moins par le filtre 32 et/ou en ouvrant la voie de dérivation d'air 35.

Le contrôle de santé moteur peut être réalisé de manière usuelle.

Eventuellement, le calculateur de contrôle 55 calcule un indice de santé moteur EPC fonction de ladite puissance courante Pcour plus ladite perte de puissance Pavio moins ladite puissance minimale garantie Pmini : EPC= Pcour+Pavio-Pmini. Eventuellement, l'indice de santé moteur EPC ne prend pas en compte ladite perte de puissance Pavio, par exemple lorsque la voie de dérivation d'air 35 est ouverte.

Conformément à la flèche Y3 en présence d'un contrôle de santé moteur réussi, à savoir en présence d'un indice de santé moteur EPC positif selon cet exemple, le procédé peut comporter une étape de génération Perf2 avec le calculateur de contrôle 55 d'une autorisation de vol de l'aéronef 1 en respectant des performances de l'aéronef prédéterminées calculées sur la base de la puissance minimale garantie Pmini du moteur 15 et d'une perte de puissance correspondant au filtre 32 colmaté.

Conformément à la flèche N3 en présence d'un contrôle de santé moteur échoué, le calculateur de contrôle peut générer un signal SGN indiquant que le moteur doit être démonté pour être révisé. En présence de plusieurs moteurs, ce procédé peut être appliqué pour chaque moteur.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Procédé de contrôle pour contrôler une installation motrice (10) d'un aéronef (1), ladite installation motrice (10) comprenant au moins un moteur (15) et une entrée d'air (31) alimentant en air ledit au moins un moteur (15), ladite installation motrice (10) comprenant un filtre (32) colmatable filtrant l'air en amont dudit moteur (15), où le procédé comporte une étape de réalisation d'un contrôle de puissance de l'aéronef à l'aide des opérations suivantes :
- étape STP1 de détermination en vol ou au sol d'une puissance courante (Pcour) développée par ledit moteur (15) au sein de l'aéronef sans prise en compte d'une perte de puissance générée par l'agencement dudit moteur (15) dans ledit aéronef (1) et d'un niveau de colmatage dudit filtre (32), et de détermination que ladite puissance courante (Pcour) est supérieure ou égale à une puissance minimale garantie (Pmini) mémorisée, ledit contrôle de puissance de l'aéronef étant considéré réussi lorsque ladite puissance courante (Pcour) est supérieure ou égale à ladite puissance minimale garantie (Pmini),
- sous condition d'un contrôle de puissance de l'aéronef échoué, étape STP2 de lavage dudit filtre (32) puis étape STP3 de réalisation d'un nouveau contrôle de puissance de l'aéronef,
- sous condition que le nouveau contrôle de puissance de l'aéronef ait échoué, étape CSM de réalisation d'un contrôle de santé moteur fonction d'une perte de puissance générée au moins par ledit filtre (32) ou en ouvrant une voie de dérivation d'air (35) alimentant sans filtre ledit moteur (15)
- démontage dudit moteur (15) en dehors de l'aéronef en cas d'échec du contrôle de santé moteur.

2. Procédé selon la revendication 1, **caractérisé en ce que** ladite détermination de la puissance courante (Pcour) dans l'étape STP1 ou STP3 comporte les opérations suivantes : mesure d'un couple moteur, calcul de la puissance courante égale au produit du couple moteur et d'une vitesse de rotation moteur, ladite vitesse de rotation moteur étant égale à une vitesse de rotation d'un arbre de sortie (26) dudit moteur (15) ou égale à une vitesse de rotation d'un arbre (27) effectuant une rotation à une même vitesse que l'arbre de sortie (26) ou au produit d'un coefficient de proportionnalité mémorisé et d'une vitesse de rotation d'un organe tournant (2) lié mécaniquement à l'arbre de sortie (26).

3. Procédé selon l'une quelconque des revendications 1 à 2, **caractérisé en ce que** ladite détermination que ladite puissance courante (Pcour) dans l'étape STP1 ou STP3 est supérieure ou égale à une puissance minimale garantie (Pmini) mémorisée comporte les opérations suivantes : calcul d'un indicateur de puissance (APC) de l'aéronef fonction uniquement de ladite puissance courante (Pcour) et d'une puissance minimale garantie (Pmini) mémorisée, ledit contrôle de puissance de l'aéronef étant considéré réussi ou échoué en fonction d'une valeur dudit indicateur de puissance de l'aéronef (1) par rapport à zéro.

4. Procédé selon l'une quelconque des revendications 1 à 3, **caractérisé en ce que** ledit contrôle de santé moteur dans l'étape CSM comporte une étape de calcul d'un indice de santé moteur (EPC) fonction de ladite puissance courante (Pcour) plus ladite perte de puissance moins ladite puissance minimale garantie (Pmini).

5. Procédé selon l'une quelconque des revendications 1 à 4, **caractérisé en ce que** sous condition d'un contrôle de santé moteur dans l'étape CSM réussi, ledit procédé comporte une étape de génération d'une autorisation de vol dudit aéronef (1) en respectant au moins une performance de l'aéronef prédéterminée calculée sur la base d'au moins une puissance minimale garantie (Pmini) dudit moteur (15) et d'une perte de puissance correspondant au filtre (32) colmaté.

6. Procédé selon l'une quelconque des revendications 1 à 5, **caractérisé en ce que** sous condition d'un contrôle de puissance de l'aéronef réussi dans l'étape STP1, STP3 ou CSM, ledit procédé comporte une étape de génération d'une autorisation de vol dudit aéronef (1) en respectant au moins une performance de l'aéronef prédéterminée calculée sur la base d'au moins une puissance minimale garantie dudit moteur (15) et d'une perte de puissance correspondant au filtre non colmaté.

7. Dispositif de contrôle (40) pour réaliser automatiquement un contrôle d'une installation motrice (10) d'un aéronef (1), ladite installation motrice (10) comprenant au moins un moteur (15) et une entrée d'air (31) alimentant en air ledit au moins un moteur (15), ladite installation motrice (10) comprenant un filtre (32) colmatable filtrant l'air en amont dudit moteur (15), **caractérisé en ce que** ce dispositif de contrôle (40) comporte :
- un système (45) de mesure d'au moins une information quantifiant une puissance courante (Pcour) développée par ledit moteur (15) indépendamment d'un niveau de colmatage du filtre (32) et
- un calculateur de contrôle (50) configuré pour appliquer les étapes STP1, STP3 et CSM du procédé de contrôle selon l'une quelconque des revendications 1 à 6.

8. Aéronef (1) muni d'une installation motrice (10), ladite installation motrice (10) comprenant au moins un moteur (15) et une entrée d'air (31) alimentant en air ledit au moins un moteur (15), ladite installation motrice (10) comprenant un filtre (32) colmatable filtrant l'air en amont dudit moteur (15),
**caractérisé en ce que** cet aéronef (1) comporte un dispositif de contrôle (40) selon la revendication 7.

## Patentansprüche

1. Verfahren zum Steuern eines Triebwerks (10) eines Luftfahrzeugs (1), wobei das Triebwerk (10) mindestens einen Motor (15) und einen Lufteinlass (31) umfasst, der dem mindestens einen Motor (15) Luft zuführt, wobei das Triebwerk (10) einen verstopfbaren Filter (32) umfasst, der die Luft stromaufwärts des Motors (15) filtert,
wobei das Verfahren einen Schritt umfasst, bei dem eine Leistungsregelung des Luftfahrzeugs mit Hilfe der folgenden Operationen durchgeführt wird:
- einem Schritt STP1 des Bestimmens einer aktuellen Leistung (Pcour) im Flug oder am Boden, die von dem Triebwerk (15) innerhalb des Luftfahrzeugs entwickelt wird, ohne Berücksichtigung eines durch die Anordnung des Triebwerks (15) in dem Luftfahrzeug (1) und einen Verstopfungsgrad des Filters (32) verursachten Leistungsverlusts, und des Feststellens, dass die aktuelle Leistung (Pcour) größer oder gleich einer gespeicherten garantierten Mindestleistung (Pmini) ist, wobei die Regelung der Leistung des Luftfahrzeugs als erfolgreich angesehen wird, wenn die aktuelle Leistung (Pcour) größer oder gleich der garantierten Mindestleistung (Pmini) ist,
- unter der Bedingung, dass die Regelung der Leistung des Luftfahrzeugs fehlgeschlagen ist, Schritt STP2 des Spülens des Filters (32) und dann Schritt STP3 des Durchführens einer neuen Regelung der Leistung des Luftfahrzeugs,
- unter der Bedingung, dass die neue Regelung der Leistung des Luftfahrzeugs fehlgeschlagen ist, Schritt CSM des Durchführens einer Motorgesundheitsprüfung in Abhängigkeit von einem zumindest durch den Filter (32) hervorgerufenen Leistungsverlust oder durch Öffnen eines Luftbypasses (35), der den Motor (15) ohne Filter speist,
- Zerlegen des Motors (15) außerhalb des Luftfahrzeugs im Falle einer fehlgeschlagenen Motor-Gesundheitsprüfung.

2. Verfahren nach Anspruch 1, **dadurch gekennzeichnet, dass** das Bestimmen der aktuellen Leistung (Pcour) im Schritt STP1 oder STP3 die folgenden Operationen umfasst: Messen eines Motordrehmoments, Berechnen der aktuellen Leistung, die gleich dem Produkt aus dem Motordrehmoment und einer Motordrehzahl ist, wobei die Motordrehzahl gleich einer Drehzahl einer Ausgangswelle (26) des Motors (15) oder gleich einer Drehzahl einer Welle (27), die sich mit der gleichen Drehzahl wie die Ausgangswelle (26) dreht, oder gleich dem Produkt aus einem gespeicherten Proportionalitätskoeffizienten und einer Drehzahl eines mechanisch mit der Ausgangswelle (26) verbundenen Drehelements (2) ist.

3. Verfahren nach einem der Ansprüche 1 bis 2, **dadurch gekennzeichnet, dass** das Bestimmen, dass die aktuelle Leistung (Pcour) in Schritt STP1 oder STP3 größer oder gleich einer gespeicherten minimalen garantierten Leistung (Pmini) ist, die folgenden Operationen umfasst: Berechnen eines Leistungsindikators (APC) des Luftfahrzeugs, der nur von der aktuellen Leistung (Pcour) und einer gespeicherten minimalen garantierten Leistung (Pmini) abhängt, wobei die Leistungsregelung des Luftfahrzeugs in Abhängigkeit von einem Wert des Leistungsindikators des Luftfahrzeugs (1) in Bezug auf Null als erfolgreich oder fehlgeschlagen betrachtet wird.

4. Verfahren nach einem der Ansprüche 1 bis 3, **dadurch gekennzeichnet, dass** die Motorgesundheitsprüfung im Schritt CSM einen Schritt des Berechnens eines Motorzustandsindex (EPC) als Funktion der aktuellen Leistung (Pcour) plus der Verlustleistung minus der garantierten Mindestleistung (Pmini) umfasst.

5. Verfahren nach einem der Ansprüche 1 bis 4, **dadurch gekennzeichnet, dass** unter der Bedingung einer erfolgreichen Motorgesundheitsprüfung im Schritt CSM das Verfahren einen Schritt des Erzeugens einer Fluggenehmigung für das Luftfahrzeug (1) unter Einhaltung mindestens einer vorgegebenen Leistung des Luftfahrzeugs umfasst, die auf der Grundlage mindestens einer garantierten Mindestleistung (Pmini) des Triebwerks (15) und einer dem verstopften Filter (32) entsprechenden Verlustleistung berechnet wird.

6. Verfahren nach einem der Ansprüche 1 bis 5, **dadurch gekennzeichnet, dass** unter der Bedingung einer erfolgreichen Regelung der Leistung des Luftfahrzeugs in Schritt STP1, STP3 oder CSM das Verfahren einen Schritt des Erzeugens einer Fluggenehmigung für das Luftfahrzeug (1) unter Einhaltung mindestens einer vorgegebenen Leistung des Luftfahrzeugs umfasst, die auf der Grundlage mindestens einer garantierten Mindestleistung des Triebwerks (15) und einer dem nicht verstopften Filter entsprechenden Verlustleistung berechnet wird.

7. Steuervorrichtung (40) zur automatischen Durchführung einer Steuerung eines Triebwerks (10) eines Luftfahrzeugs (1), wobei das Triebwerk (10) mindestens einen Motor (15) und einen Lufteinlass (31) umfasst, der dem mindestens einen Motor (15) Luft zuführt, wobei das Triebwerk (10) einen verstopfbaren Filter (32) umfasst, der die Luft stromaufwärts des Motors (15) filtert, **dadurch gekennzeichnet, dass** diese Steuervorrichtung (40) umfasst:
- ein System (45) zur Messung mindestens einer Information, die eine von dem Motor (15) erzeugte aktuelle Leistung (Pcour) unabhängig von einem Verstopfungsgrad des Filters (32) quantifiziert, und
- einen Steuercomputer (50), der konfiguriert ist, um die Schritte STP1, STP3 und CSM des Steuerverfahrens nach einem der Ansprüche 1 bis 6 auszuführen.

8. Luftfahrzeug (1) mit einem Triebwerk (10), wobei das Triebwerk (10) mindestens einen Motor (15) und einen Lufteinlass (31) umfasst, der dem mindestens einen Motor (15) Luft zuführt, wobei das Triebwerk (10) einen verstopfbaren Filter (32) umfasst, der die Luft stromaufwärts des Motors (15) filtert, **dadurch gekennzeichnet, dass** dieses Luftfahrzeug (1) eine Steuervorrichtung (40) nach Anspruch 7 aufweist.

## Claims

1. Checking method for checking a power plant (10) of an aircraft (1), said power plant (10) comprising at least one motor (15) and an air inlet (31) that supplies air to said at least one motor (15), said power plant (10) comprising a cloggable filter (32) that filters the air upstream of said motor (15),
wherein the method comprises a step of performing an aircraft power check by means of the following operations:
- step STP1 of determining, in flight or on the ground, a current power (Pcour) developed by said motor (15) within the aircraft, without taking into account a power loss produced by the arrangement of said motor (15) in said aircraft (1) and a degree of clogging of said filter (32), and of determining that said current power (Pcour) is greater than or equal to a stored guaranteed minimum power (Pmini), said aircraft power check being considered successful if said current power (Pcour) is greater than or equal to said guaranteed minimum power (Pmini),
- if the aircraft power check fails, step STP2 of washing said filter (32), then step STP3 of performing a new aircraft power check,
- if the new aircraft power check fails, step CSM of performing a motor health check as a function of a power loss produced at least by said filter (32) or by opening an air bypass path (35) that supplies said motor (15) without filtering,
- dismantling said motor (15) outside the aircraft if the motor health check fails.

2. Method according to claim 1, **characterised in that** said determination of the current power (Pcour) in step STP1 or STP3 comprises the following operations: measurement of a motor torque, calculation of the current power equal to the product of the motor torque and a motor rotation speed, said motor rotation speed being equal to a rotation speed of an output shaft (26) of said motor (15) or equal to a rotation speed of a shaft (27) rotating at the same speed as the output shaft (26), or the product of a stored coefficient of proportionality and a rotation speed of a rotating member (2) mechanically connected to the output shaft (26).

3. Method according to any of claims 1 to 2, **characterised in that** said determination, in step STP1 or STP3, that said current power (Pcour) is greater than or equal to a stored guaranteed minimum power (Pmini) comprises the following operations: calculation of a power indicator (APC) of the aircraft as a function only of said current power (Pcour) and a stored guaranteed minimum power (Pmini), said aircraft power check being considered successful or failed on the basis of a value of said power indicator of the aircraft (1) with respect to zero.

4. Method according to any of claims 1 to 3, **characterised in that** said motor health check in step CSM comprises a step of calculating a motor health index (EPC) as a function of said current power (Pcour) plus said power loss minus said guaranteed minimum power (Pmini).

5. Method according to any of claims 1 to 4, **characterised in that** if the motor health check in step CSM is successful, said method comprises a step of generating a flight authorisation for said aircraft (1) in accordance with at least one predetermined performance of the aircraft calculated on the basis of at least one guaranteed minimum power (Pmin) of said motor (15) and a power loss corresponding to the filter (32) being clogged.

6. Method according to any of claims 1 to 5, **characterised in that** if the aircraft power check in step STP1, STP3 or CSM is successful, said method comprises a step of generating a flight authorisation for said aircraft (1) in accordance with at least one predetermined performance of the aircraft calculated on the basis of at least one guaranteed minimum power of said motor (15) and a power loss corresponding to the filter not being clogged.

7. Checking device (40) for automatically performing a check of a power plant (10) of an aircraft (1), said power plant (10) comprising at least one motor (15) and an air inlet (31) that supplies air to said at least one motor (15), said power plant (10) comprising a cloggable filter (32) that filters the air upstream of said motor (15),
**characterised in that** this checking device (40) comprises:
- a system (45) for measuring at least one piece of information quantifying a current power (Pcour) developed by said motor (15) independently of a degree of clogging of the filter (32) and
- a checking computer (50) configured to apply the steps STP1, STP3 and CSM of the checking method according to any of claims 1 to 6.

8. Aircraft (1) provided with a power plant (10), said power plant (10) comprising at least one motor (15) and an air inlet (31) that supplies air to said at least one motor (15), said power plant (10) comprising a cloggable filter (32) that filters the air upstream of said motor (15), **characterised in that** this aircraft (1) comprises a checking device (40) according to claim 7.
